# EUROPEAN PATENT APPLICATION

(11) **EP 1 906 662 A2**
(43) Date of publication of application: **02.04.2008**
(21) Application number: 07253814.3
(22) Date of filing: 26.09.2007
(51) Int. Cl.: H04N 5/775, G11B 31/00

(54) **Television display apparatus and video recording/reproducing apparatus**

(30) Priority: 29.09.2006 JP 2006267055
(71) Applicant: Hitachi, Ltd., Chiyoda-ku Tokyo 100-8220 (JP)
(72) Inventor: Wayama, Masaki c/o Hitachi Ltd. Intellectual Property Group, Tokyo 100-8220 (JP)
(74) Representative: Calderbank, Thomas Roger

(57) **Abstract**

A television display apparatus and a video recording/reproducing apparatus are provided, which are improved in the usability thereof. The television display apparatus comprises a display portion (11), and a slot portion (14), into which a removable hard disk drive device (13) . The hard disk drive device (13), which can be inserted into the slot portion, can record television broadcast signals received by the television display apparatus, and the slot portion mentioned above is provided on a side surface of a housing (10) of that television display apparatus.

## Description

The present invention relates to a television display apparatus being attachable with a removable hard disk device, and a video recording/reproducing apparatus.

For the purpose of recording video contents therein, such as, television broadcast signals or the like, sometimes a hard disk device (hereinafter, being called "HDD") is used. In recent years, because of an increase of video contents of HD (High definition) type, i.e., being large in data volume thereof, it is advantageous for the HDD having a large memory capacity, to record such contents thereon.

Also, for recording the video contents thereon, further much more, it is already known in Japanese Patent Laying-Open No. 2002-150754 (2002), for example, to conduct the recording thereof with using the HDD and also other recording medium, in combination with. In this Japanese Patent Laying-Open No. 2002-150754 (2002), it is disclosed a video recording/reproducing apparatus of HDD built-in type, being so constructed to be removable with an optical disk therein, such as, DVD, etc., and further displaying library information, in relation to the video contents recorded on the built-in HDD and further on the removable recording medium, while managing it within the built-in HDD, collectively.

With the conventional arts mentioned above, although applying the optical disk as the recording medium other than the HDD built-in within the apparatus, but the optical disk exposes the recording surface thereof, therefore it is necessary to fully pay attention on dealing thereof, for example, when inserting or loading it into the apparatus.

Also, in many cases when recording the video contents on the recording medium, recording is made on the television broadcast signals. Accordingly, it is preferable to make the recording medium removable from the main body of that television display apparatus to receive the television broad cast signals for displaying thereof; however, no consideration is paid upon such matters in the conventional art mentioned above, nor no consideration is paid on convenience in relation to attaching of the removable recording medium.

An object, according to the present invention, is to provide a television display apparatus and a video recording/reproducing apparatus, being removable with the recording medium and improved in usability or operability thereof.

According to the present invention, for accomplishing the object mentioned above, there is provided a television display apparatus, being characterized in that a slot portion, for inserting a removable HDD therein, is provided on a side surface of a housing of the said television display apparatus. Such the television display apparatus may builds a HDD therein, other than the removable HDD mentioned above.

Also, a video recording/reproducing apparatus, according to the present invention, is characterized by comprising a first built-in HDD device, a slot portion, into which a second removable HDD can be inserted, and a library information display portion for displaying library information relating to recording condition of the first HDD and the second HDD.

According to the present invention, it is possible to provide the television display apparatus and the video recording/reproducing apparatus, being detachable with a recording medium, as wellas, improved in the usability thereof.

Those and other objects, features and advantages of the present invention will become more readily apparent from the following detailed description when taken in conjunction with the accompanying drawings wherein:
Fig. 1 is a block diagram for showing the structures of a video recording/reproducing apparatus, according to an embodiment of the present invention;
Fig. 2 is a view for showing an example of a library screen, according to the present embodiment;
Fig. 3 is a view for showing an example of a screen of a recording program list on a library job schedule screen;
Fig. 4 is a view for showing an example of hierarchies of selection items on the library screen, according to the present embodiment;
Fig. 5 is a view for showing an example of screen of the job schedule screen of the library information, according to the present embodiment;
Fig. 6 is a view for showing an example of a screen for selecting yes/no of execution of a scheduled job, according to the present embodiment;
Fig. 7 is a view for showing an example of the screen, in particular, when an error occurs on the job, according to the present embodiment;
Fig. 8 is a view for showing an example of a screen of finished jobs, according to the present embodiment;
Fig. 9 is a flowchart for showing a flow of processes for programming a library job content, according to the present embodiment;
Fig. 10 is a flowchart for showing a flow of processes for conducting an error treatment, according to the present embodiment; and
Figs. 11(a) to 11(c) are views for showing an outlook of a television display apparatus, according to the present invention.

Hereinafter, embodiments according to the present invention will be fully explained by referring to the attached drawings.

### [Outlook Structure of Apparatus]

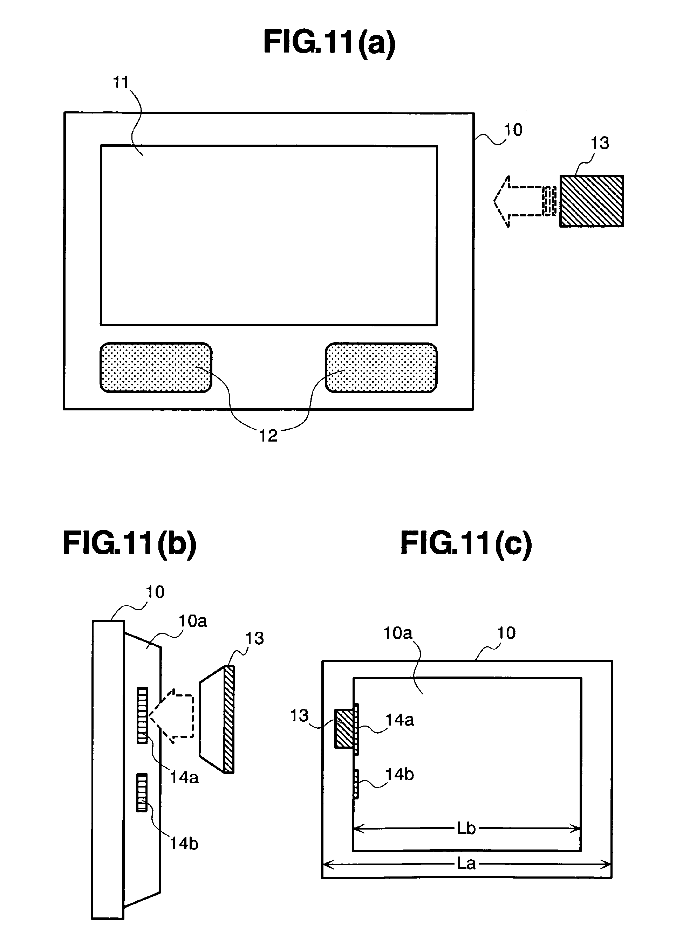

Figs. 11 (a) and 11 (b) are views for showing an outlook of a television display apparatus, according to an embodiment of the present invention, wherein Fig. 11(a) shows the outlook of the television display apparatus, in particular, seen from a front surface, Fig. 11(b) that seen from a side (the right-hand side) surface thereof, and Fig. 11 (c) that seen from a rear surface thereof, respectively.

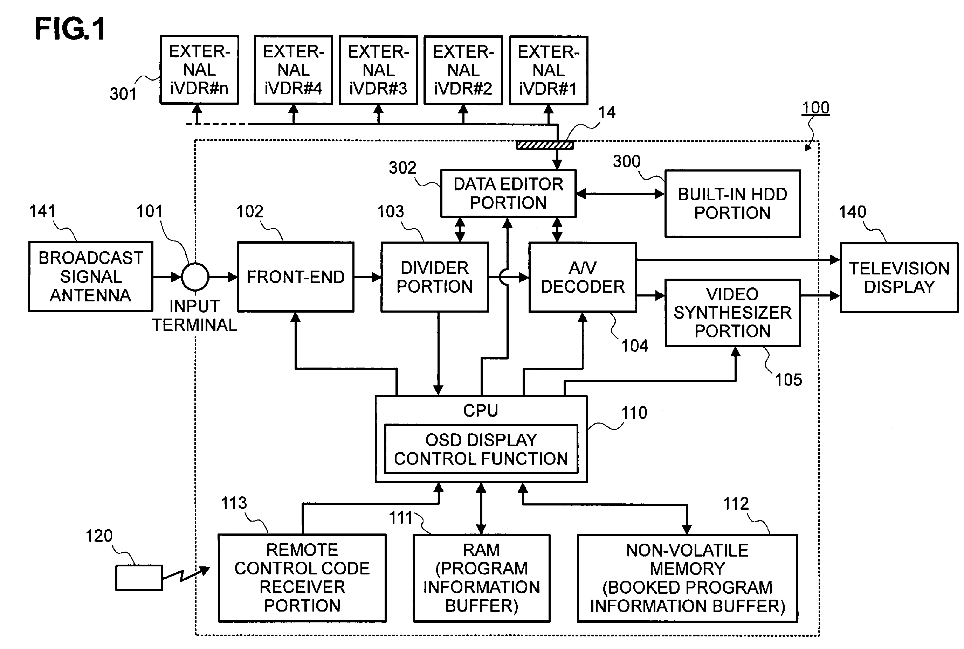

The outlook configuration of the television display apparatus is defined by a housing 10, wherein a front surface thereof is provided a display surface or screen 11, which is constructed with a PDP or LCD, etc. Also, in a lower portion of the display screen 11 on the housing 10, there are provided speakers 12 and 12 in a pair thereof. And, the television display apparatus according to the present embodiment is so constructed that a removable HDD 13 can be inserted therein, from a side surface of the housing 10. Thus, as is apparent from Fig. 11 (b), slot portions 14a and 14b are provided on the side surface of the housing 10 (i.e., on the right-hand side surface in Fig. 1), into each of which the removable HDD 13 can be inserted, and therefore a user can insert the removable HDD 13 into the slot portion 14a or 14b provided on the side surface of the housing 10, depending on necessity thereof, so as to record video contents, such as, television broadcast signals, etc., therein.

In the present embodiment, as that removable HDD 13 is applied a HDD, which is called "iVDR (information Versatile Disc for Removable usage)". For the iVDRs being different in the sizes thereof, there are two (2) regulations, mainly, wherein the one is for 2-inch size, i.e., width × depth × height being 80.0 × 110.0 × 12. 7 mm, and the other is for 1.8-inch size, i.e., width × depth × height being 80 × 67 × 10 mm, respectively. Further, other than those, there is also a regulation, which is called "iVDR micro" of 1-inch size, width × depth × height being 50 × 50 × 8 mm. According to the present embodiment, there are provided a plural number of slot portions 14a and 14b, each being different in the size of opening thereof, for the purpose of enabling an insertion thereof, corresponding to the iVDRs being difference in the sizes thereof. With this, it is possible to apply the iVDRs of various kinds of regulations, therein. However, the slot portion is provided by two (2) in the present embodiment, but it may be provided more than that, or alternately, it may be one (1) having the structure being compatible with iVDRs of a plural number of sizes. Also, in explanation of the present embodiment, which will be given hereinafter, the removable HDD 13 is called by "iVDR 13".

Also, in the present embodiment, the housing 10 includes a back cover 10a, for covering over a driver circuit for driving a display device, such as, the PDP or LCD, etc., for example, and a video processing circuit. A size "Lb" in the horizontal direction of this back cover 10a is made to be smaller than the size "La" of the housing 10 in the horizontal direction, as is shown in Fig. 11 (c) . The slot portions 14a and 14b are provided on a side surface portion of the back cover 10a. With this, as is shown in Fig. 11 (c), visually, the iVDR 13 cannot acknowledged by a user, since it is hidden behind a rear surface of the housing 10 under the condition that it is inserted into the slot portion, even when observing the television display apparatus from a front surface under the condition of inserting the iVDR 13 into the slot portion thereof. Accordingly, with the structures of the present embodiment, it is possible to provide an iVDR-compatible television display apparatus, being superior from a viewpoint of designing.

### [Structures of Video Recording/Reproducing Apparatus]

Following to the above, explanation will be given on an example of the block structures of circuits in a video recording/reproducing apparatus, according to the present embodiment, by referring to Fig. 1 attached herewith. Hereinafter, the explanation of the present embodiment will be made by taking the television display apparatus, having such the structures as was mentioned above, as an example thereof. As is shown in Fig. 1, the television display apparatus includes a display controller device 100 therein, and each of constituent elements built within that display controller device 100 is controlled by means of a CPU (Central Processing Unit) 110, which conducts a calculation control processing in accordance with programs stored in a non-volatile memory 112. Also, the display controller device 100 can be operated with an aid of a remote controller 120. Thus, a remote control signal from the remote controller 120 is received upon a remote controller code receiving portion, and it is transmitted to the CPU 110. Then, the CPU 110 analyzes command contained in the remote control signal received, thereby to control each portion.

In Fig. 1, the television broadcast signal (for example, a terrestrial digital broadcast wave, a BS broadcast wave, or a CS broadcast wave), being received on a broadcast signal antenna 141 and inputted from an input terminal 101, is transmitted to a front end 102 of the display controller device 100. The front end 102, being in synchronism with a receiving band, which is selected by a user, not shown in the figure, demodulates the received data to be supplied into a divider portion 103 in the format of the Transport Stream (TS) . The divider portion 103 extracts video data and audio data from the inputted data, i.e., dividing them, thereby supplying video/audio data to an A/V decoder 104.

The A/V decoder 104 decodes the video data and the audio data from the divider portion 103. And, it supplies the decoded audio signal to the television display 140, while supplying the decoded video signal to a video synthesizer portion 105. The video synthesizer portion 105 has a function of OSD (On Screen Display), i.e., superposing character information or the like upon the picture (i.e., program video) displayed on the television display 140. Also, upon the television signal is superposed additional data other than the video and the audio data, such as, an electronic program guide, a caption, data broadcast, etc., for example, and the divider portion 103 further divides those additional data therefrom. The video synthesizer portion 105 supplies the additional data divided to the television display 140, in the place of the video signal or superposing it on the video signal. Also, the video synthesizer portion 105 further supplies a screen of reservation list table of programs, being booked for recording/viewing thereof, and library information, which will be mentioned later, other than the additional data mentioned above, to the television display 140, to be displayed thereon.

Next, explanation will be made on the recording operation of the television broadcast signal. The video data and the audio data, being divided within the divider portion 103 mentioned above, are supplied to a data editor portion 302, which is controlled by the CPU 110. The data editor portion 302 outputs data that the user wishes depending on the control of the CPU 110, thereby supplying it to a built-in HDD 300. In this instance, the data outputted from the data editor portion is assumed to be data of the TS format. The built-in HDD 300 records the data of the TS format outputted from the data editor portion therein. The broadcast data recorded within the built-in HDD 300 can be edited within the data editor portion 302, as the broadcast data. The editing mentioned herein includes, for example, deletion, protection, removal of protection, move (copy), and dubbing of data, division of data, and combination of plural numbers of broadcast data, etc. Also, the data editor portion 302 can supply the data of the TS format to the iVDR 301, which is inserted into the slot portion 14, depending upon necessity thereof (for example, responding to a command from the user), thereby recording that data into the iVDR.

Furthermore, the built-in HDD 300 can also record the library information therein, in relation to the video contents recorded. This library information includes, not only the information of video contents recorded in the built-in HDD 300, but also the information of video contents of the iVDR 301 (#1 to #n), into which the video contents are recorded by using the present video recording/reproducing apparatus. For example, when recording a certain program while inserting the iVDR 301 attached with an ID, i.e., "#1", into the slot portion 14, the ID of that iVDR 301 and the information of recording program (i.e., a channel, a program title, recording date, etc.) are stored into the built-in HDD 300, as the library information (hereinafter, storage of this information may be called "library registration" as the case may be). With doing so, that library information is reserved within the built-in HDD 300, even if the iVDR 301 (#1) is removed from the slot portion 14. Accordingly, with the present embodiment, it is possible to build up and display the library information relating to that recording program, by means of the video recording/reproducing apparatus, if it is the iVDR 301, into which the video contents are recorded, at least once, with using the present video recording/reproducing apparatus. Details of use and edition of this library information will be mentioned later.

When reproducing the data recorded, the data recorded is read out from the external iVDR 301 or the built-in HDD 300, to be supplied to the A/V decoder 104 for decoding the video data and the audio data therein. The A/V decoder 104 decodes the video data and the audio data readout, to supply them to the television display 140. Also, with the video signal decoded, it may be supplied to the television display 140, but after being supplied to the video synthesizer portion 105.

In this manner, with the present embodiment, it is possible to record the television broadcast signal into the built-in HDD 300 and/or the iVDR 301, and it is also possible to reproduce the recording data from those recording media to be displayed. Since the iVDR is covered with the case or housing and it has a large memory capacity of several tens GB, for example, therefore it is possible to record the video contents therein, much more, comparing to the apparatus detachable with an optical disk, with easy handling thereof.

### [Regarding Library Function]

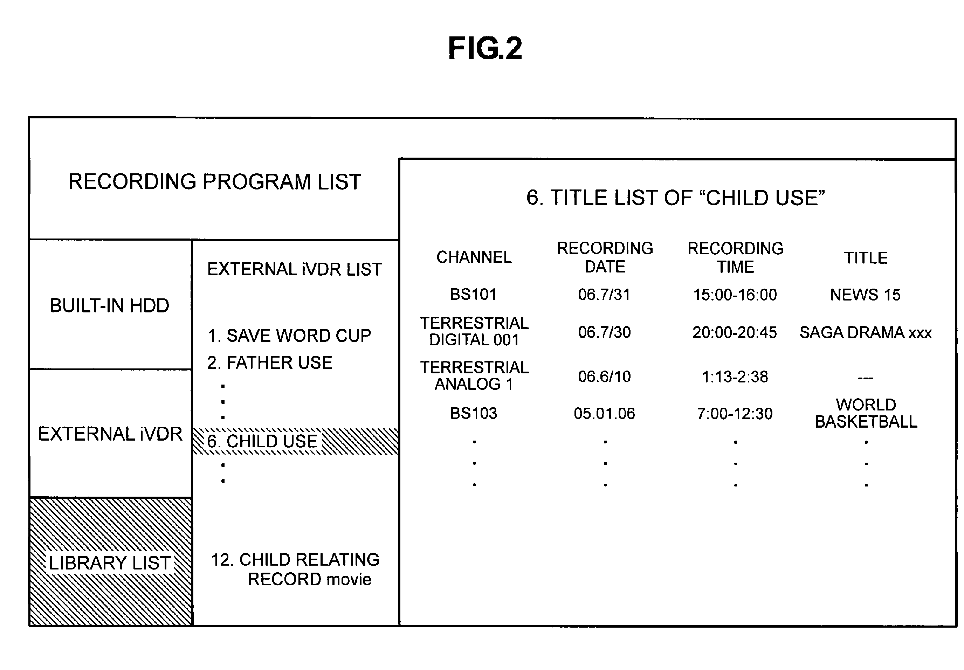

Next, explanation will be made on the library function, according to the present embodiment. Fig. 2 shows an example of a display screen of the library information (being called "library screen") to be used in the present embodiment. As is shown in Fig. 2, the library screen according to the present embodiment is attached with a title, "Recording Program List", wherein selection items for selecting a kind of the recording medium (i.e., built-in HDD 300/external iVDR 301) are arranged on the left-hand side, while selection items for selecting a library list in the vertical direction thereof.

Herein, when selecting "Recording Program List", a list is displayed of the programs, which are recorded in the built-in HDD and the external iVDR registered in the video recording/reproducing apparatus as the library thereof. Also, when selecting an item, i.e., "Buit-in HDD" or "External iVDR", a list is displayed of programs, which are recorded in the recording medium selected. Or, when selecting "Library List", a list is displayed of the libraries. The example in Fig. 2 shows the case where "External iVDR List" is displayed, as a list of the libraries, after selecting "Library List". This "External iVDR List" shows a list of iVDRs, upon each of which recording of program was made, or editing job was made, with using that television display apparatus, once. Further, when selecting a title attached on a desired iVDR (i.e., an identification information of the iVDR) from the "External iVDR List", a list is displayed of the programs, which are recorded in that iVDR, on the right-hand side thereof. On this list of the recording programs are displayed a channel, a recording date, a recording time, and a title, corresponding to each of the recording programs.

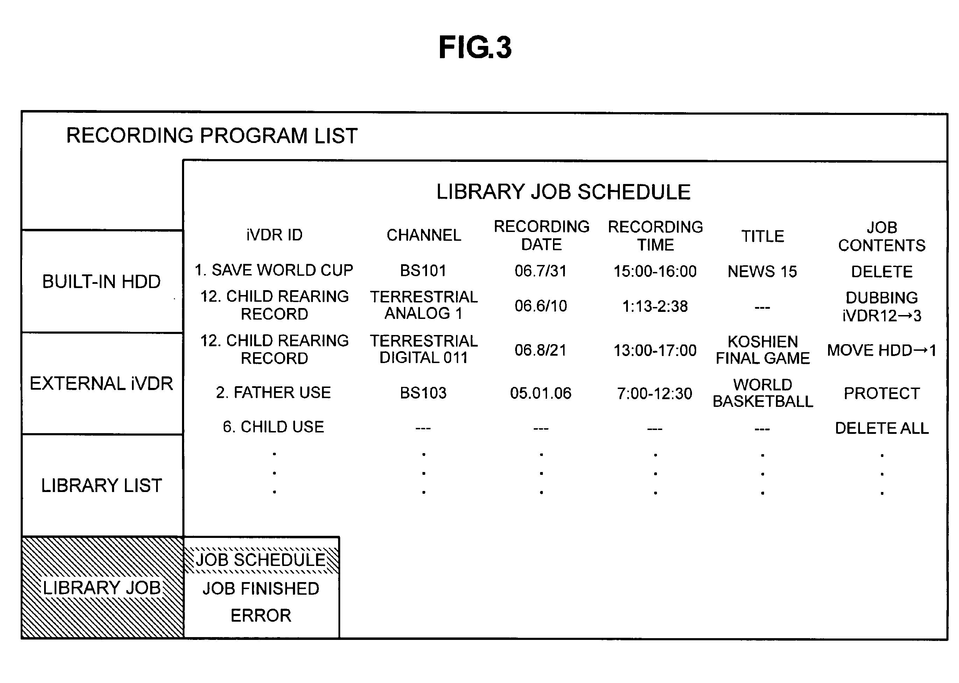

Fig. 3 shows other example of the library screen to be applied in the present embodiment. Onto this library screen, differing from that shown in Fig. 2, there is added a selection item, i.e., "Library Job" on the lower-left corner thereof. When selecting this, it is possible to make edition onto the library information for each of the recording programs, i.e., editing jobs, such as, deletion, protection, cancellation of protection, move (copy), and dubbing of data, etc., on that library screen. The example shown on the top in Fig. 3 shows the case when deleting "News 15" among the recording programs within the iVDR attached with the title, "1. Save World Cup", and that at the bottom thereof, the case when deleting all the recording contents of the iVDR attached with the title "6. Child Use" thereon.

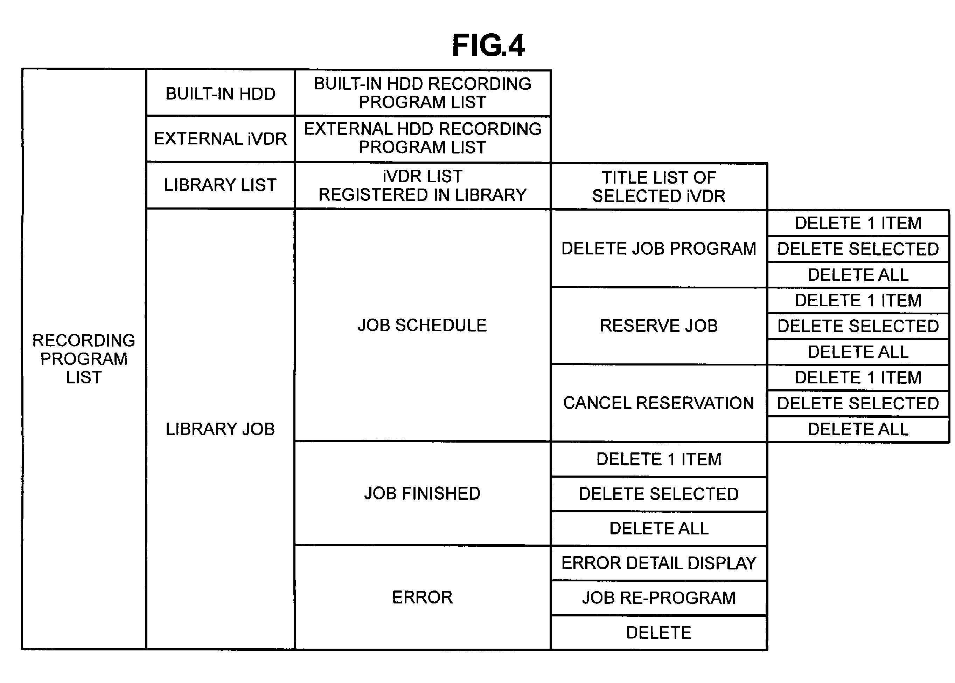

Fig. 4 shows contents of the selection items on the library screen,hierarchically,accordingtothe presentembodiment.Thus, this Fig. 4 shows a manner where the selection item is changed from the left-hand side to the right-hand side on Fig. 4, depending on select instruction by the user. When making an instruction of displaying "Recording Program List" through operation on a button (s) provided on the remote controller 120, then the following four (4) items are selectable; i.e., "Buit-in HDD", "External iVDR", "Library List" and "Library Job". Operation to be done upon selection (i.e., display contents) of each selection item are as shown on the right-hand side thereof. For example, when selecting the "Buit-in HDD", a list is displayed of the programs, which are recorded in the built-in HDD.

Also, from the "Library Job", the following three (3) items can be selected, i.e., "Job Schedule", "Job Finished" and "Error", and from the "Job Finished", the following three (3) items can be selected, i.e., "Delete 1 item", "Selective Delete" and "All Delete".

Hereinafter, explanation will be made on those three (3) items, i.e., "Job Schedule", "Job Finished" and "Error", within the video recording/reproducing apparatus mentioned above, in particular, the manner or method of editing the recording programs from the display of the library screen, easily.

### [Regarding Job Schedule]

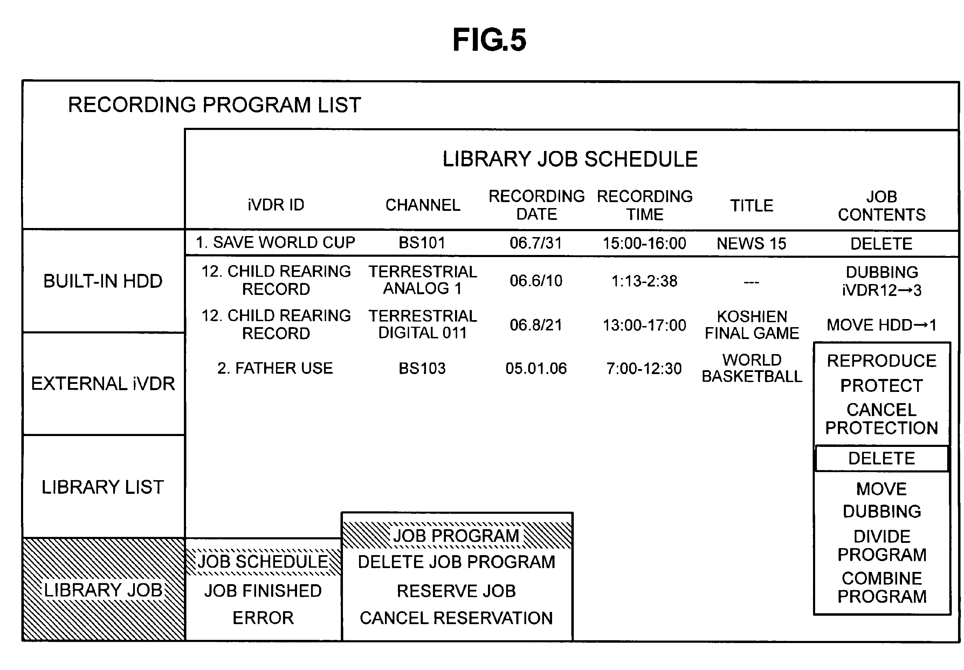

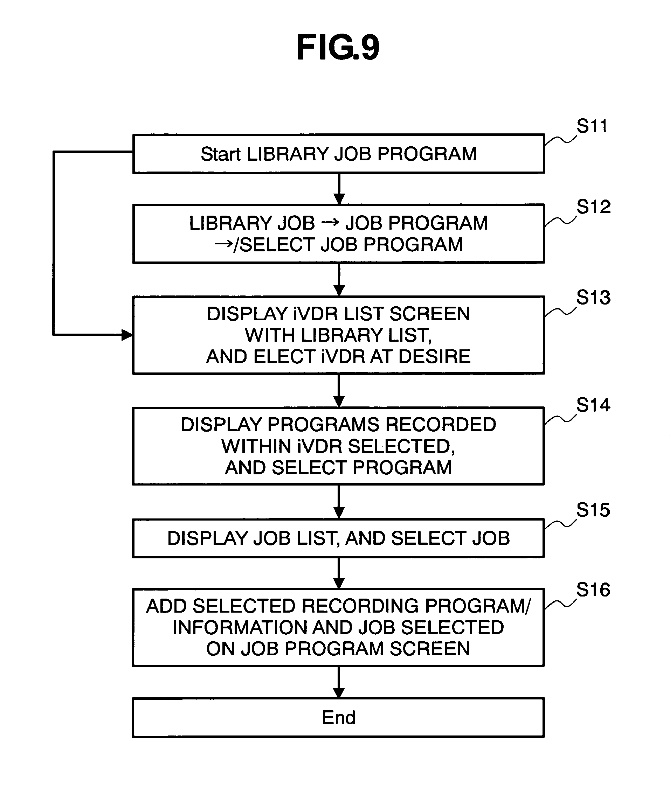

Fig. 5 shows the job schedule screen for the recording programs, according to the present embodiment, and in particular, in more details of a manner of the library job, including selection of the recording program and the job. Selection display of such the library job can be achieved through the operation, which will be mentioned below, for example, and will be explained by referring to the flowchart shown in Fig. 9, in common. This Fig. 9 is the flowchart for explaining the operation starting from a library j ob schedule screen to decision of the job contents to the recording program.

First of all, when starting the library job schedule in a step S-11, selection items comes to be selectable. Thereafter, the process advances into a step S-12, where the selection item is selected in the order, i.e., "Library Job" → "Job Schedule" → "Job Program", as shown in Fig. 5. When the "Job Program" is selected, a portion of data of iVDR list is read out from the built-in HDD300, to be displayed on the library list, and the display transits into the iVDR list screen, as is shown in Fig. 2, which are registered into the library. Thereafter, selection is made upon the iVDR desired (S-13). When the desired iVDR is selected, a list is displayed of the programs, which are recorded within that iVDR, and then the desired recording program can be selected (S-14).

Next, the screen shifts into that shown in Fig. 5, and then the selected recording program and the recording program information thereof (i.e., iVDR ID, channel, recording date, recording time, title name) are displayed on the "Library Job Schedule", in particular, in the lower side thereof, and further the job list is displayed at the right-hand side on the screen. From this job list, the job at a target is selected (S-15). Passing through such steps, the selected recording program, the recording program information thereof, and the job are described onto the library job, additionally (S-16). And, the contents of that addition are recorded into the built-in HDD. However, this job may starts from, not only the job schedule screen, but also from the library list display (S-13).

When the iVDR is inserted, having an ID corresponding to the iVDR/ID designated in the library job program mentioned above, jobs programmed are automatically executed. For example, when an iVDR named "Save World Cup", having the iVDR/ID "#1", is inserted into the present video recording/reproducing apparatus, "News 15", being the recording program selected, is deleted, automatically. However, in case where that iVDR is inserted at the time point when the job schedule mentioned above is additionally described thereon, the job selected is executed, immediately, through the flowchart shown in Fig. 9.

In this manner with the present embodiment, it is possible to designate an edition job of the library, in advance, for the recording programs, which are recorded in the built-in HDD 300 and are registered in the library, in other words, to make a programming of the library job. Accordingly, when inserting an external iVDR recording the program therein, being the edition target, automatically conducted the edition, which is designated in advance, within the data editor portion 302, thereby enabling to record and/or manage a result of that edition within the HDD portion 300. Therefore, according to the structures of the present embodiment, it is possible to make the edition/management of a massive amount or volume of the recording programs by a user easy.

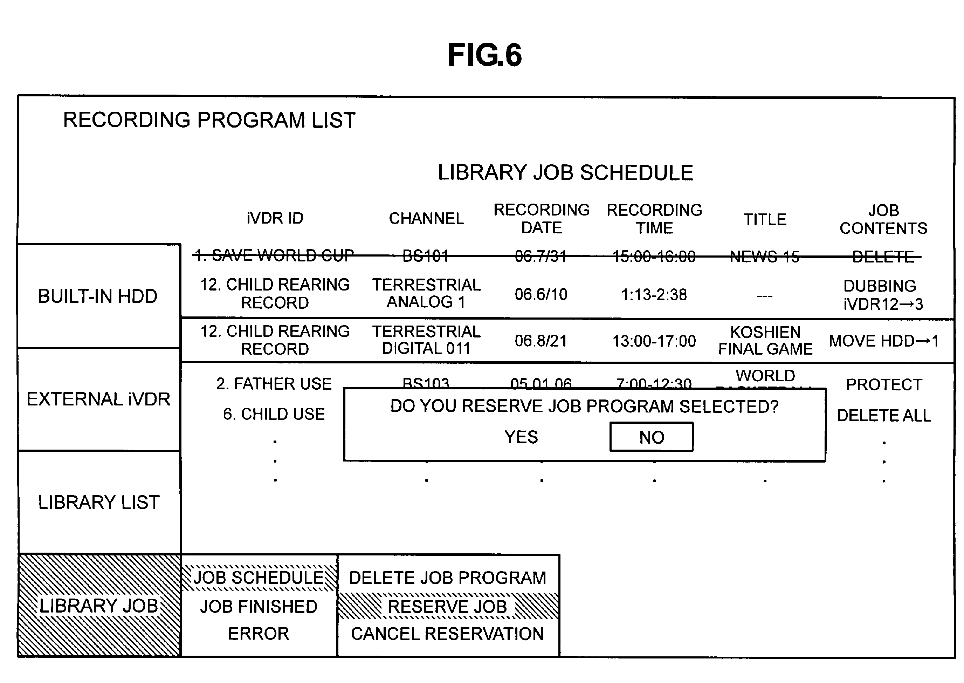

Other example relating to programming of the library job will be explained, by referring to Fig. 6. This Fig. 6 shows an example of the screen for making selection on whether it is executed (or reserved) or not, on the job programmed for the recording program selected. As is shown in Fig. 6, if "Reservation" is selected on the job programmed from the library schedule screen, the job programmed is reserved, but not be executed, irrespective of insertion of the corresponding iVDR. A horizontal line, being drawn or hatched on the "News 15" of iVDR/"#1", indicates that the recording program is now under the "Job Reservation" condition. At the same time, there is also displayed a selection screen, for determining on whether the execution should be reserved or not, in particular, on the program "Koshien (Japanese famous baseball Stadium) Last Game", which is recorded in the iVDR/"#12". Also, if selecting the item, "Cancel Reservation" displayed in the lower portion of the screen, it is possible to execute the job, which was once reserved, again. Further, selecting the item, "Cancel Job Program", it is possible to cancel both the recording program, which was once registered, and the job thereof, at the same time.

### [Regarding Library Job Error]

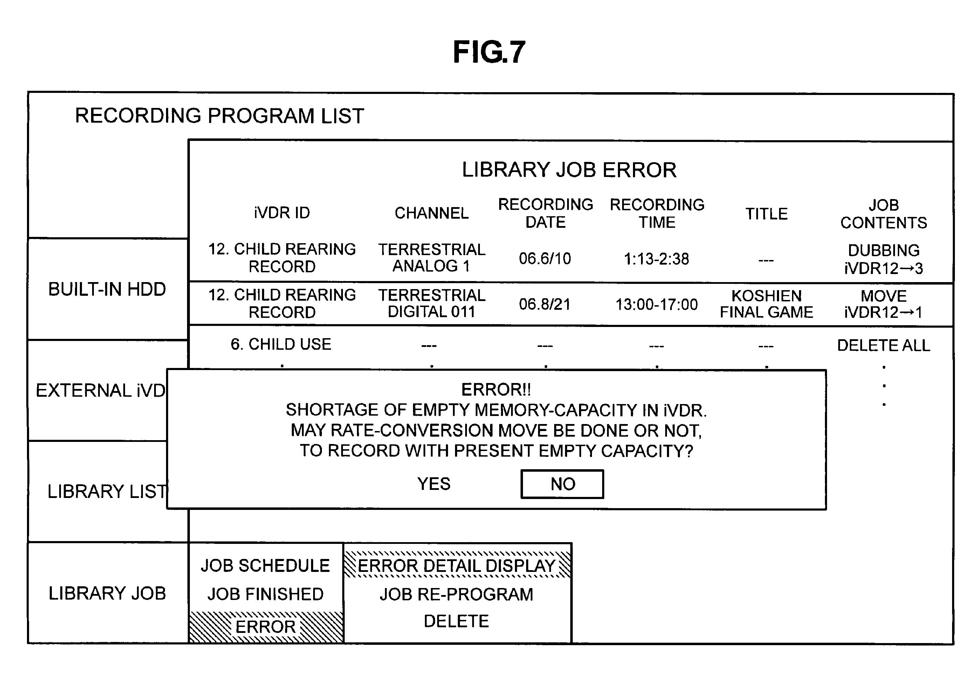

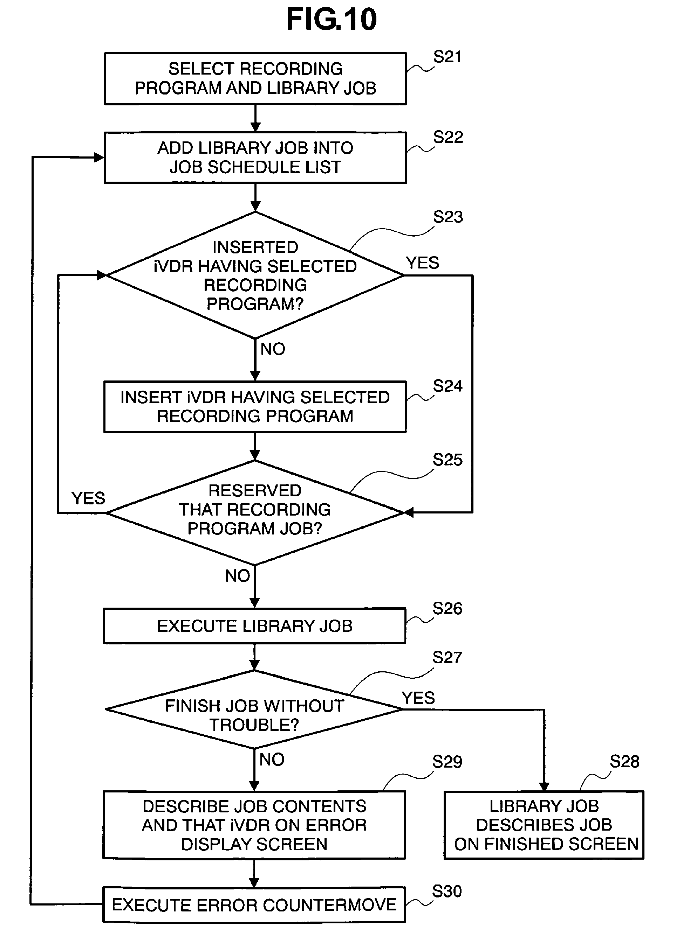

Since the library job is not always done without causing problem thereon, when executing it, there is a necessity of a countermeasure or countermove when job error occurs, which will be explained below. An error display of such the library job can be achieved by the operations, which will be mentioned below, for example. Fig. 7 shows contents of the error on the job error screen and a selection screen for selecting conduction/non-conduction of display of the way of countermove for dealing with that and on whether execution/non-execution of that countermove. Also, Fig. 10 is a flowchart for explaining the operation starting from the library job programming to display of contents of the library error and execution of error countermove, according to the present embodiment. However, the flowchart is executed by means of the CUP 110.

First of all, in S-21, selection is made on the library job at desire, as well as, the iVDR and recording program, in accordance with the steps mentioned above. Next in S-22, the library job is added to the job schedule. Following to the above, in S-23 is made determination on whether the iVDR selected is inserted or not, into the slot portion, and if it is inserted therein, the process proceeds into S-25. On the other hand, if it is not inserted therein, the selected iVDR is inserted in S-24, and then the process proceeds into S-25. In this S-25, determination made on whether the execution thereof is reserved or not, about the job programmed, and if it is not reserved, then the process proceeds into S-26, wherein the library job programmed is executed. If it is reserved, execution of the library job programmed is reserved, and then the process turns back to S-23. After executing the library job in S-26, the process proceeds into S-27, wherein determination is made on whether the library job is completed without causing any problem or not. In case where the library job is ended without any trouble, the recording program selected and the job thereof are recorded into the built-in HDD portion 300, and in S-28, they are registered on the screen of job finished (S-28). The screen of job finished will be mentioned later.

On the other hand, in case where an error is caused in the library job programmed, the process proceeds into S-29, and thereby displaying an error screen, as is shown in Fig. 7, for example. On this error screen, as is shown in Fig. 7, there are described iVDR selected (i.e., ID of iVDR), contents of the job, contents of the error, and contents of countermove for the error. When conducting the error countermove in accordance with the displayed error contents (S-30), then the process turns back into step S-22, the recording program selected and the job thereof are registered into the job schedule list, again (re-registered).

The "Job Re-Program" shown in Fig. 7 is an item, which will be selected when the process transits from S-30 to S-22 in the flowchart shown in Fig. 10, after the user makes the countermove for the job error. Also, an item, "Delete" shown in the similar manner, is used when deleting the job contents, but without conducting the error countermove.

### [Regarding Screen of Job Finished]

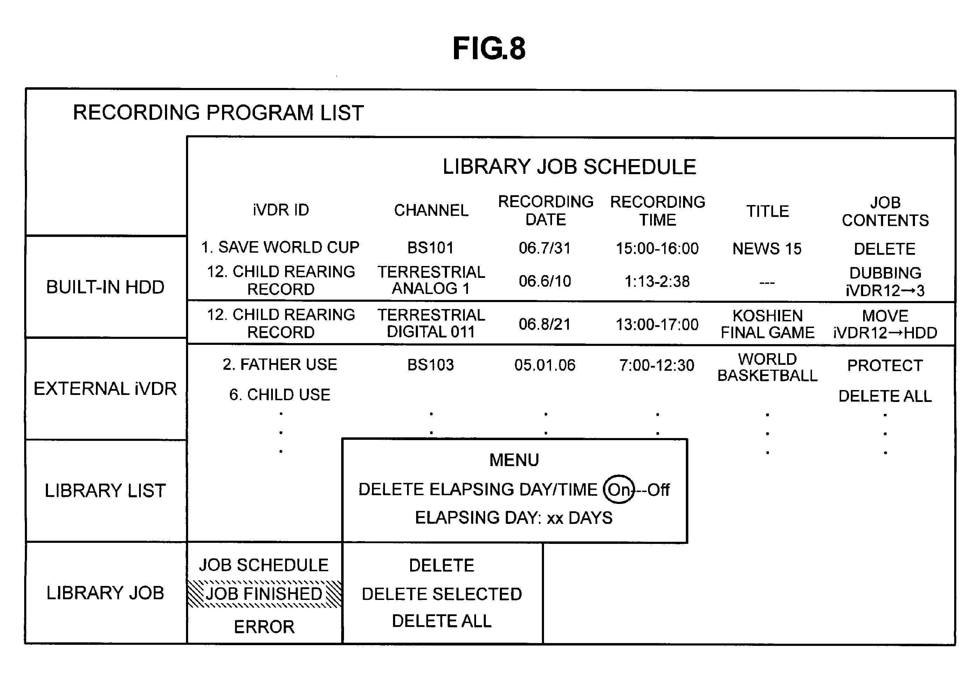

Fig. 8 shows an example of a screen of job finished of the library jobs, according to the present embodiment. After insertion and execution of the iVDR selected on the library job schedule mentioned above, the recording program selected and the job contents thereof are descried on the screen of finished job, additionally. When elapsing "O O" days from the date and time of completing the job, on a menu screen shown in Fig. 8, the items of the finished job list are deleted, automatically. Also, not deleting the job automatically, there may be provided a function of manual deletion, i.e., designating among "Delete 1 Item", "Delete Selected" and "Delete All".

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims, as interpreted by the description and drawings.

## Claims

1. A television display apparatus, comprising:
a receiver portion, which is configured to receive a television broadcast signal;
a slot portion, which is configured to be inserted with a movable hard disk drive device therein;
a recording portion, which is configured to record the television broadcast signal received on said receiver portion into said movable hard disk drive device, being able to be inserted into said slot portion; and
a display portion, which is configured to be able to display video, upon basis of at least either one of the television broadcast signal received on said receiver port and a reproduction signal reproduced from said hard disk drive device inserted into said slot portion, wherein
said slot portion is provided on a side surface of a housing of said television display apparatus.

2. The television display apparatus, as described in the claim 1, wherein said slot portions are provided, in a plural number thereof, on the side surface of the housing of said television display apparatus.

3. The television display apparatus, as described in the claim 2, wherein each of said plural number of slot portions is able to be inserted with one of a plural number of said hard disk drive devices, being different in sizes thereof.

4. A television display apparatus, comprising:
a receiver portion, which is configured to receive a television broadcast signal;
a first hard disk drive device, which is built within said television display apparatus;
a slot portion, which is able to be inserted with a second movable hard disk drive device therein;
a recording portion, which is configured to record the television broadcast signal received on said receiver portion into said first hard disk drive device built therein, and/or said second movable hard disk drive device inserted into said slot portion; and
a display portion, which is configured to be able to display video, upon basis of at least either one of the television broadcast signal received on said receiver port and reproduction signals reproduced from said first hard disk drive device built therein and and said second movable hard disk drive device inserted into said slot portion, wherein
said slot portion is provided on a side surface of a housing of said television display apparatus.

5. The television display apparatus, as described in the claim 4, wherein recording contents of said first hard disk drive device can be copied or moved into said second removable hard disk drive device.

6. The television display apparatus, as described in the claim 4, wherein recording contents of said second removable hard disk drive device can be copied or moved into said first hard disk drive device.

7. A video recording/reproducing apparatus, comprising:
a receiver portion, which is configured to receive video information thereon;
a first hard disk drive device, which is built within said video recording/reproducing apparatus;
a slot portion, which is able to be inserted with a second movable hard disk drive device therein;
a recording/reproducing portion, which is configured to record the television broadcast signal received on said receiver portion into said first hard disk drive device built therein, and/or said second movable hard disk drive device inserted into said slot portion, and also to reproduce the video information recorded in said first and said second hard disk drive devices; and
a library information display portion, which is configured to display library information thereon, for showing information relating to recording conditions of said first hard disk drive device and said second hard disk drive device.

8. The video recording/reproducing apparatus, as described in the claim 7, wherein said library information is stored within said first hard disk drive device.

9. The video recording/reproducing apparatus, as described in the claim 7, wherein said library information includes therein, at least information of a title of television program recorded, a recording date, and a recording time thereof.

10. The video recording/reproducing apparatus, as described in the claim 9, wherein said library information includes therein, further identification information of said second hard disk drive device.

11. The video recording/reproducing apparatus, as described in the claim 7, wherein said library information is editable therein.

12. The video recording/reproducing apparatus, as described in the claim 11, wherein edition of said library information includes deletion, protection, cancellation of protection, moving, dubbing and dividing of video information recorded therein.

13. The video recording/reproducing apparatus, as described in the claim 12, wherein information relating to sorts of edition of said library information is displayed for each of the video information recorded therein.

14. The video recording/reproducing apparatus, as described in the claim 13, wherein further information, relating to completion of job of said edition or an job error of the edition is commonly displayed thereon, in addition to said library information.
